# EUROPÄISCHE PATENTSCHRIFT

(11) **EP 2 955 056 B1**
(45) Veröffentlichungstag und Bekanntmachung des Hinweises auf die Patenterteilung: **31.07.2019**
(21) Anmeldenummer: 15171658.6
(22) Anmeldetag: 11.06.2015
(51) Int. Cl.: B60N 3/06, B60N 2/24, B60N 2/30, B60N 2/42, B64D 11/06, B60N 2/885

(54) **DÄMPFUNGSMODUL FÜR EINEN FAHRZEUGSITZ**
DAMPING MODULE FOR A VEHICLE SEAT
MODULE D'AMORTISSEMENT POUR UN SIÈGE DE VÉHICULE

(30) Priorität: 13.06.2014 DE 102014108380
(43) Veröffentlichungstag der Anmeldung: 16.12.2015
(73) Patentinhaber: König Komfort-und Rennsitze GmbH, 74360 Ilsfeld (DE)
(72) Erfinder: Uzarevic, Marko, 74360 Ilsfeld (DE); Hagenlocher, Martin, 73655 Plüderhausen (DE); Schimmer, Thorsten, 74906 Bad Rappenau (DE)
(74) Vertreter: Witte, Weller & Partner Patentanwälte mbB

(56) Entgegenhaltungen:
- WO-A1-2013/186681
- GB-A- 1 278 921

## Beschreibung

Die Erfindung betrifft ein Dämpfungsmodul für einen Fahrzeugsitz zum Dämpfen von schockartigen Vertikalbewegungen des Fahrzeugs bei insbesondere durch Minen oder IEDs verursachten Druckwellen, wobei das Dämpfungsmodul ein Gestell aufweist, das ortsfest mit einem Fahrzeug verbindbar ist und an dem ein Fahrzeugsitz montierbar ist, und wobei das Dämpfungsmodul ein Dämpfungselement zur Dämpfung des Fahrzeugsitzes aufweist.

Ein gattungsgemäßes Dämpfungsmodul der oben genannten Art ist beispielweise aus der WO 2013/186681 A1 bekannt. Ein ähnliches Dämpfungsmodul ist ferner aus der GB 1 278 921 A bekannt.

Derartige Dämpfungsmodule finden bei zivilen und militärischen Rad- und Kettenfahrzeugen sowie bei Baumaschinen, Kränen und Kranfahrzeugen Einsatz.

Bei einem Schockszenario wird das Fahrzeug, an dem der Sitz befestigt wird, innerhalb von Sekundenbruchteilen insbesondere vertikal angehoben. Ist der Sitz starr mit dem Fahrzeug verbunden, wirken erhebliche Kräfte schockartig auf eine auf dem Sitz aufgenommene Person ein. Dabei können Schäden im Bereich des Nackens, der Wirbelsäule und insbesondere den unteren Lendenwirbeln auftreten. Nach dem Einwirken der Druckwelle in vertikaler Richtung unter Anheben des Fahrzeuges erfolgt ein ebenfalls ruckartiges Abfallen des Fahrzeuges aufgrund der Schwerkraft. Dieser sogenannte Rebound stellt eine weitere schockartige Krafteinwirkung dar. Ein solches Schockszenario tritt beispielswiese auf, wenn ein Fahrzeug über eine zündende Mine oder eine Sprengfalle, sogenannte IED = Improvised Explosive Device, fährt. Bei Baumaschinen, Kränen und Kranfahrzeugen können solche Schockszenarien bei Unfällen, Geländeeinbrüchen oder Umfallen der Gerätschaften auftreten.

Daher wurden Dämpfungssysteme entwickelt, um Anteile der bei der schockartigen Bewegung auf die Person einwirkenden Energie zu absorbieren.

Bei Systemen mit Abscherbolzen sind diese während des Fahrbetriebs statisch fest im Fahrzeug oder in einer Kabine montiert. Bei Eintreten des Schock-Ereignisses oder bei einem vertikalen Crash, scheren die Bolzen bei einer zuvor festgelegten Kraft ab und der Sitz kann sich, relativ zum sich anhebenden Fahrzeug gesehen, nach unten bewegen.

Weitere Systeme arbeiten mit Stoßdämpfern oder Gasfedern, um eine Relativbewegung zwischen Sitz und Fahrzeug zu ermöglichen und dabei möglichst viel Energie aufzunehmen. Diese Systeme werden in der Regel mit der Sitzstruktur hinter der Lehne oder mit der Lehne direkt verbunden. Bei den Systemen mit Abscherbolzen und Federn kann der Sitz nach dem Schock-Ereignis wieder nach oben schnellen (Rebound), was weitere erhebliche Belastungen des Sitzenden zur Folge hat.

Ein weiterer Nachteil solcher Systeme besteht darin, dass nach einem ersten Schock-Ereignis das System meist nicht mehr in der Lage ist, einen evtl. weiteren Schock zu reduzieren. Solche Systeme stellen dann sogar ein erhöhtes Risiko dar, da in diesem Fall der Sitz die Beschleunigungen ohne Verzögerung in Bewegung umsetzt, so dass die Belastung für den Menschen in einem gefährlichen Maß zunimmt. Die Folge sind schwere Verletzungen der Wirbelsäule und der unteren Extremitäten.

Bei bekannten Systemen mit Gasfedern oder Dämpfern sieht der Sitzaufbau nicht vor, dass die Lehne nach vorne klappbar ist. Meist sind die Rückenlehnen nicht oder nur minimal in der Neigung einstellbar. Durch den erforderlichen Hub des Dämpfungssystemes von ca. 200 mm und der entsprechend langen Ausführungen der Gasfedern oder Stoßdämpfer, wird der Bauraum hinter dem Sitz verbaut, so dass Stauraum und Gepäck, welches sich hinter dem Sitz befindet, nicht oder nur sehr schwer erreicht werden kann.

Andere Sitzsysteme, welche vorwiegend aus Gewebe und Gurtband hergestellt werden, werden über zusätzliche notwendige Spanngurte im Fahrzeug fixiert. Durch die notwendige Abspannung dieser Sitze zur Dach- und Bodenstruktur des Fahrzeuges oder Kabine entstehen im Fahrzeug Platzprobleme und teilweise Stolperfallen.

Diese Konstruktionen benötigen sehr viel Platz im Fahrzeug, welcher in der Regel nicht vorhanden ist. Bei militärischen Transportfahrzeugen sitzen die Personen üblicherweise quer zur Fahrrichtung und mehrere Fahrzeugsitze sind gegenübergerichtet und nebeneinander angeordnet. Der mittige Raum zwischen den Sitzreihen soll möglichst frei bleiben, damit die Personen sich im Fahrzeug bewegen, beispielsweise dieses rasch verlassen können. Daher ist es notwendig, die Ausrüstung möglichst hinter dem Sitz zu verstauen. Dazu ist es wichtig, dass ausreichend Stauraum hinter dem Sitz zur Verfügung steht und dieser auch einfach erreicht werden kann, wozu es günstig ist, dass die Rückenlehne nach vorne geklappt werden kann.

Daher besteht ein Bedarf an relativ kleinbauenden kompakten Dämpfungssystemen, die so mit einem Sitz verbunden werden können, dass insbesondere dessen Rückenlehne nach vorne geklappt werden kann. Da insbesondere bei Truppentransporten relativ lange Transportwege über unwegsames Gelände erfolgen, soll eine körpergerechte und ergonomisch korrekte Sitzhaltung möglich sein, um keine unnötigen Ermüdungserscheinungen zu erzeugen.

Es ist daher Aufgabe der Erfindung, ein Dämpfungsmodul für einen Fahrzeugsitz zu entwickeln, das kompakt baut, das die Dämpfung mehrerer aufeinander folgender Schock-Ereignisse ermöglicht, das insbesondere den sogenannten Rebound erträglich macht und das die eigentlichen Sitzfunktionen, wie Verstellbarkeit, Umklappbarkeit von Lehne und Sitz, nicht beeinflusst.

Erfindungsgemäß wird die Aufgabe dadurch gelöst, dass am Gestell ein Rahmen befestigt ist, der einen ersten, bezüglich des Rahmens höhenverfahrbaren Träger aufweist, welcher mit dem am Rahmen montierten Dämpfungselement verbunden ist, und der ferner einen relativ zum ersten Träger höhenverfahrbaren zweiten Träger aufweist, der den Fahrzeugsitz trägt, wobei erster und zweiter Träger über einen Scherenhebelmechanismus miteinander verbunden sind, und dass der erste Träger über zumindest eine Feder zusätzlich gegenüber dem Gestell federnd abgestützt ist, so dass ein Absenken des ersten Trägers relativ zum Gestell um ein Maß A ein Einziehen des Scherenhebelmechanismus und somit ein Absinken des Sitzes um ein Maß B > A bewirkt, wobei der erste Träger mit einem Kreuzungspunkt zweier gekreuzter Stäbe eines Scherenhebelelementes des Scherenhebetmechanismus verbunden ist.

Der erste Träger, der mit dem Dämpfungselement verbunden ist, braucht nur einen relativ kurzen Hub durchzuführen. Dadurch kann ein erheblicher Betrag der Energie während der nur Millisekunden dauernden Schockeinwirkung an das Dämpfungselement übertragen werden.

Da der erste Träger über einen Scherenhebelmechanismus mit dem zweiten Träger verbunden ist, der den Sitz trägt, kann der Hub des zweiten Trägers ein Mehrfaches des Hubes des ersten Trägers betragen.

Beträgt beispielsweise der Hub des ersten Trägers 50 mm, kann durch den Scherenhebelmechanismus der Hub des zweiten Trägers, natürlich in dieselbe Richtung, beispielsweise das Vierfache, also 200 mm, betragen.

Dadurch baut das Dämpfungselement in der Höhe sehr gering, erlaubt dennoch die erforderlichen Relativlaufwege zwischen Gestell und Sitz im Bereich von etwa 200 mm zur Reduzierung der Schockeinwirkung.

Wird beispielsweise ein Fahrzeug bei einem Schock-Ereignis zwischen 300 und 500 mm angehoben, kann durch Einziehen des Scherenhebelmechanismus eine diesem Schock-Ereignis entgegengesetzt gerichtete Bewegung des Sitzes von 200 mm erfolgen, so dass letztendlich ein Hub des Sitzes gegenüber dem Fahrgrund von nur 100 bis 300 mm erfolgt.

Der Sitz kann so am zweiten Träger montiert werden, dass alle anderen Funktionen, wie dessen Verstellbarkeit oder die Umklappbarkeit der Lehne, dadurch nicht beeinträchtigt werden.

Nach dem Schock-Ereignis, also das vertikale Anheben des Fahrzeuges, erfolgt dann das Herabfallen des Fahrzeuges mit einem entsprechend harten Aufschlag auf den Grund. Durch Vorsehen der zumindest einen Feder kann insbesondere dieser Aufprall abgefedert werden, so dass auch der Rebound gemindert werden kann. Beim Herabfallen findet quasi die umgekehrte Relativbewegung zwischen Fahrzeug und Sitz statt. Das Fahrzeug sackt schnell nach unten auf den Boden ab und zieht den zwischenzeitlich angehobenen Sitz schlagartig nach unten. Dies kann durch die zumindest eine Feder abgefedert werden.

Insgesamt gesehen kann somit die Belastung, die auf eine auf dem Fahrzeugsitz sitzende Person bei einem Schock-Ereignis einwirkt, erheblich gemindert werden, und zwar sowohl beim vertikalen Anheben als auch beim nachfolgenden Herabfallen. Das Dämpfungssystem kann trotz seiner relativ kleinen Maße einen relativ langen gedämpften Hub von bis zu 200 mm erfüllen. Dazu ist nur ein relativ kurzer Hub am Dämpfungselement notwendig, wobei gleichzeitig der Sitz aufgrund des Scherenhebelmechanismus über einen relativ langen Weg abgefedert werden kann. Der Rebound, also die Rückfederung des Sitzes, kann über Federn, die in ihrer Vorspannung einstellbar sein können, zusätzlich gedämpft werden.

Ein weiterer Vorteil der Federn ist, dass eine gewisse Dämpfung während des normalen Fahrbetriebes, speziell im Gelände ermöglicht werden kann.

Ein Scherenhebelmechanismus ist im einfachsten Fall aus einem einzigen Scherenhebelelement aufgebaut, das zwei gekreuzte Stäbe aufweist, die über einen Kreuzungspunkt miteinander verbunden sind.

Ein solcher Scherenhebelmechanismus kann prinzipiell dadurch bewegt werden, dass die äußeren Enden der Stäbe aufeinander zu bewegt werden, wodurch der Scherenhebelmechanismus ausfährt, wie das beispielsweise bei der bekannten "Nürnberger Schere" der Fall ist.

Man kann einen solchen Scherenhebelmechanismus aber auch dadurch bewegen, dass man die Enden der gekreuzten Stäbe an einem Ende des Mechanismus an einem Widerlager fixiert und an einem Kreuzungspunkt angreift und diesen gegenüber dem Widerlager in der Höhe verschiebt, wie das beispielsweise bei einer Hebebühne der Fall ist, die am bodenseitigen Ende an einem Fahrgestell montiert ist, und das freie ausfahrbare Ende einen Tragekorb aufweist Aufgrund des Scherenhebelmechanismus kann ein relativ kurzer axialer Hub des Kreuzungspunktes in eine entsprechend längere Hubbewegung des freien Endes umgesetzt werden.

Bei dem vorliegenden Dämpfungsmodul erlaubt der Scherenhebelmechanismus eine entsprechende Umsetzung des relativ kurzen Hubes des ersten Trägers durch die Verbindung mit dem Kreuzungspunkt in einen entsprechend längeren Hub des zweiten Trägers.

In einer weiteren Ausgestaltung der Erfindung weist der Scherenhebelmechanismus mehrere aneinandergereihte Scherenhebelelemente auf, die jeweils aus einem Paar an über Kreuz gelegten Stäben aufgebaut sind.

Die zuvor erwähnte Umsetzung vervielfacht sich entsprechend der Anzahl der Scherenhebelelemente.

In einer weiteren Ausgestaltung der Erfindung weist der Scherenhebelmechanismus zwei Scherenhebelelemente auf.

Diese Maßnahme hat den Vorteil, dass mit einem aus zwei Scherenhebelelementen aufgebauten Scherenhebelmechanismus eine kompakte Baueinheit geringer Bauhöhe geschaffen werden kann, die mechanisch ausreichend stabil ist, um die erheblich einwirkenden Kräfte zu übertragen und die den relativ langen Hub des Sitzes ermöglicht.

In einer weiteren Ausgestaltung der Erfindung ist der Scherenhebelmechanismus in einer Führung aufgenommen.

Ein Scherenhebelmechanismus hat zahlreiche bewegende Teile. Das sind einmal die Kreuzungspunkte der gekreuzten Stäbe sowie die äußeren Enden der über Kreuz gelegten Stäbe sowie, im Fall von mehreren aneinander gesetzten Scherenhebelelementen, die Verbindungsstellen der Enden der Stäbe untereinander.

Trotz der schockartig einwirkenden Kräfte soll sich der Scherenhebelmechanismus in seiner Bewegungsebene der bewegten Hebel bewegen und nicht seitlich ausbauchen oder abknicken. Durch Vorsehen einer Führung kann diese Bewegung exakt in der Hebelebene gezielt geführt werden. Die Führung muss sich hauptsächlich zwischen den beiden Trägern erstrecken, zwischen denen diese zu führenden Bauelemente vorhanden sind. Dazu erhöht sich nicht die Bauhöhe, so dass trotz einer zusätzlichen Führung die Baueinheit kompakt bleibt.

In einer weiteren Ausgestaltung der Erfindung sind an den Endpunkten der freien Enden der gekreuzten Stäbe, über die diese mit dem zweiten Träger verbunden sind, Führungselemente angeordnet, die in horizontal verlaufenden Führungsbahnen in dem Träger führbar sind.

Diese Maßnahme hat den Vorteil, dass die beim Aus- und Einfahren des Scherenhebelmechanismus notwendige horizontale Bewegung der freien Enden geführt wird, und zwar in Führungsbahnen in dem zweiten Träger, der den großen Hub ausführt und der mit dem Sitz verbunden ist. Es sind also keine zusätzlichen Führungselemente notwendig, sondern der Träger direkt dient als Führung für diese Bauteile.

In einer weiteren Ausgestaltung der Erfindung sind die Führungselemente als Buchsen ausgebildet und die Führungsbahnen als Nuten, in denen die Buchsen laufen.

Diese Ausgestaltung erlaubt bei den schockartigen Krafteinwirkungen und den damit im Millisekundenbereich ablaufenden Bewegungen, diese zielgerichtet und geführt ablaufen zu lassen. Die Buchsen können entsprechend mechanisch stabil ausgebildet werden, um auch mehrere Schockeinwirkungen aushalten zu können.

In einer weiteren Ausgestaltung der Erfindung weist die Führung zumindest eine Führungsplatte auf, die ortsfest mit dem Gestell verbunden ist, und in der zumindest eine Führungsbahn ausgespart ist, in der weitere bewegende Teile des Scherenhebelmechanismus führbar sind.

Die zuvor schon angesprochenen sich bewegenden Bauteile, wie die Kreuzungspunkte der Stäbe und die Enden der Stäbe, bewegen sich in dem Bereich zwischen dem ersten und dem zweiten Träger. Es ist möglich, eine mit dem Gestell ortsfest verbundene, somit stabile Führungsplatte vorzusehen, die durch die darin vorgesehenen Führungsbahnen die sich bewegenden Bauteile des Scherenhebelmechanismus führt.

Wie zuvor erwähnt bewegen sich diese Bauteile in einer Scherenebene. Daher kann etwa parallel zu dieser Scherenebene eine ortsfeste Führungsplatte vorgesehen werden, in der Führungsbahnen ausgespart sind, in die dann entsprechende seitlich vorspringende Bauteile der bewegenden Teile des Scherenhebelmechanismus eingreifen,

In einer weiteren Ausgestaltung der Erfindung weist dazu der Scherenhebelmechanismus an den Kreuzungspunkten der sich kreuzenden Stäbe Führungselemente auf, die in den Führungsbahnen der Führungsplatte laufen.

Auch hier ist von Vorteil, wenn die Führungselemente als Buchsen ausgebildet sind, die in den Führungsbahnen laufen, die an den Kreuzungspunkten vorhanden sind.

Besonders vorteilhaft sind dazu die Führungsbahnen als vertikale Nuten in der Führungsplatte ausgebildet, in denen die Buchsen laufen.

Diese Maßnahme hat den Vorteil, dass durch die stabil auszubildende und ortsfest mit dem Gestell verbundene Führungsplatte sich bewegende Bauteile des Scherenhebelmechanismus, insbesondere im Bereich der Kreuzungspunkte der gekreuzten Stäbe, sicher geführt werden können.

In einer weiteren Ausgestaltung der Erfindung sind in der Platte horizontal verlaufende Nuten ausgespart, in denen Führungselemente der Endpunkte der sich kreuzenden Stäbe desjenigen Schwenkhebelelementes geführt sind, die dem ersten Träger zugewandt sind.

Diese Maßnahme hat den Vorteil, dass die Endpunkte der sich kreuzenden Stäbe desjenigen Schwenkhebelelementes, das dem ersten Träger zugewandt ist, nicht zwingend mit diesem verbunden werden müssen, sondern sich in der Platte abstützen und darin bewegen.

Ein Scherenhebelmechanismus braucht ein Widerlager an einem Ende, wenn er dadurch bewegt wird, dass die Kreuzungspunkte der gekreuzten Stäbe hin und her bewegt werden. Wenn also die sich kreuzenden Stäbe des Scherenhebelelementes, das dem Träger zugewandt ist, an diesem angebracht werden, muss, wenn man den Kreuzungspunkt vom ersten Träger weg oder auf diesen zu ziehen will, ein entsprechend bewegliches Element vorgesehen werden.

Mit der nun vorgeschlagenen Maßnahme kann der zweite Träger direkt starr mit dem Kreuzungspunkt verbunden werden. Das Widerlager und die Möglichkeit der horizontalen Ausweichbewegung der Enden der gekreuzten Stäbe stellt nun die Platte mit den horizontal verlaufenden Nuten bereit.

Auch dies trägt zu einer kompakten und gut geführten Bauweise des Dämpfungselementes bei.

In einer weiteren Ausgestaltung der Erfindung ist am Gestell ein Rahmen montiert, der den ersten und den zweiten Träger höhenverschiebbar trägt.

Diese Maßnahme hat den Vorteil, dass das Gestell einerseits so konstruiert werden kann, dass es die geeigneten Befestigungspunkte mit dem Fahrzeug zur Verfügung stellt, die eigentlich dämpfenden Bauelemente aber in dem Rahmen montiert sind.

In einer weiteren Ausgestaltung der Erfindung weist das Gestell zwei seitliche Hauptführungsstangen auf, an die der Rahmen in unterschiedlichen Höhen fest montierbar ist.

Die beiden seitlichen hochstehenden Hauptführungsstangen können beispielsweise im Bodenbereich und an der Decke oder der Wand eines Fahrzeuges fest montiert werden, lassen aber zwischen diesen ausreichend Raum zur Verfügung, um beispielsweise Gerätschaften zwischen diesen Stangen hindurchzuführen und zu verstauen. Die Höhenverstellbarkeit des Rahmens erlaubt es nun, je nach örtlichen Gegebenheiten den Sitz und das Dämpfungselement in der jeweils geeigneten Höhe zu montieren.

In einer weiteren Ausgestaltung der Erfindung weist der Rahmen eine untere Querstrebe auf, auf der sich ein Ende des Dämpfungselements abstützt, dessen anderes Ende mit dem ersten Träger verbunden ist.

Diese Maßnahme hat den Vorteil, dass eine kompakte und stabile Bauweise durchführbar ist und die Stelle, an der das Dämpfungselement angebracht ist, auch gut zugänglich sein kann, um dieses entweder zu montieren oder auszutauschen.

In einer weiteren Ausgestaltung der Erfindung weist der Rahmen zwei Seitenteile auf, die mit der unteren Querstrebe verbunden sind und die am oberen Ende über eine obere Querstrebe verbunden sind.

Dadurch wird ein etwa rechteckiger Rahmen zur Verfügung gestellt, innerhalb dem sich die wesentlichen Bauelemente des Dämpfungsmodules befinden, nämlich der erste und zweite Träger, der sich dazwischen erstreckende Scherenhebelmechanismus und die ggf. vorhandenen Führungen, insbesondere die Führungsplatte, die fest mit dem Rahmen verbunden sein kann.

In einer weiteren Ausgestaltung der Erfindung ist der zweite Träger in den Seitenteilen geführt. Diese Führung erlaubt eine exakte Relativbewegung zwischen dem ersten Träger und dem sich beim Einziehen des Scherenhebelmechanismus auf diesen zu bewegenden zweiten Träger.

In einer weiteren Ausgestaltung der Erfindung ist der zweite Träger mit Führungsrollen versehen, die über eine Führungsplatte laufen, die fest mit dem Gestell bzw. dem Rahmen verbunden sind.

Diese Maßnahme hat den Vorteil, dass die Bewegung des zweiten Trägers nicht nur durch die Führung in den Seitenteilen geführt ist, sondern noch zusätzlich durch die auf einer Führungsplatte laufenden Führungsrollen.

Dadurch ist ein Verkanten oder Verklemmen des zweiten Trägers bei der ruckartigen Bewegung auf den ersten Träger zu ausgeschlossen.

In einer weiteren Ausgestaltung der Erfindung sind zwei Druckfedern beidseits des Scherenhebelmechanismus, aber innerhalb des Rahmens angeordnet.

Diese Maßnahme hat den Vorteil, dass eine besonders günstige kompakte Bauweise erzielt wird und durch Vorsehen von zwei Druckfedern eine gleichmäßige Abfederung möglich ist.

In einer weiteren Ausgestaltung der Erfindung sind die Federn als hochstehende Schraubenlinienfedern ausgebildet, die einerseits mit dem zweiten Träger verbunden sind und sich andererseits an dem Rahmen abstützen.

Dies ermöglicht auch im Nicht-Schockfall eine gewisse Abfederung des zweiten Trägers, der den Sitz trägt, bei Geländefahrten.

Es versteht sich, dass die vorgenannten und die nachstehend noch zu erläuternden Merkmale nicht nur in den angegebenen Kombinationen, sondern auch in anderen Kombinationen einsetzbar sind, soweit diese im Rahmen der Erfindung liegen, wie sie in den Ansprüchen definiert ist.

Die Erfindung wird nachfolgend in Zusammenhang mit den beiliegenden Zeichnungen näher beschrieben und erläutert. Es zeigen:
- Fig. 1: eine perspektivische Ansicht eines Fahrzeugsitzes von vorne mit ausgefahrener Fußstütze und mit einem an der Rückseite der Rückenlehne angeordnetem Dämpfungsmodul,
- Fig. 2: die Ansicht von Fig. 1 mit eingezogener Fußstütze und hochgeklapptem Sitzteil,
- Fig. 3: die perspektivische Ansicht von Fig. 1 mit nach vorne herabgeklappter Rückenlehne,
- Fig. 4: eine entsprechende perspektivische Ansicht von hinten, wobei die hintere Führungsplatte des Dämpfungsmoduls abgenommen ist,
- Fig. 5: eine perspektivische Ansicht nur des Dämpfungsmoduls von hinten mit abgenommener hinterer Führungsplatte in einer normalen Betriebsstellung im ungestörten Fahrbetrieb,
- Fig. 6: einen Vertikalschnitt des Dämpfungsmoduls von Fig. 5,
- Fig. 7: eine der Darstellung von Fig. 5 vergleichbare Darstellung mit einer Situation bei etwa 50 % Belastung des Dämpfungsmoduls,
- Fig. 8: eine entsprechende perspektivische Darstellung mit voller Belastung des Dämpfungsmoduls,
- Fig. 9: eine der Fig. 5 entsprechende Darstellung mit montierter hinterer Führungsplatte,
- Fig. 10: eine perspektivische Ansicht des Dämpfungsmoduls von vorne, und
- Fig. 11: ein Diagramm, bei dem der DRI_{z}-Wert gegenüber der Zeit dargestellt ist, und zwar einmal bei einem Schock-Ereignis mit Dämpfungsmodul und einmal ohne Dämpfungsmodul.

In den Figuren ist ein Fahrzeugsitz in seiner Gesamtheit mit der Bezugsziffer 10 bezeichnet.

An dem Fahrzeugsitz 10 ist ein in seiner Gesamtheit mit der Bezugsziffer 12 bezeichnetes Dämpfungsmodul montiert.

Der Fahrzeugsitz 10 weist eine Rückenlehne 14 auf, die an ihrem oberen Ende mit einer höhenverfahrbaren Kopfstütze 15 versehen ist.

Der Fahrzeugsitz 10 weist ferner ein Sitzteil 16 auf.

Ein Aufnahmewinkel 18 dient einerseits dazu, sowohl die Rückenlehne 14 als auch das Sitzteil 16 zu tragen.

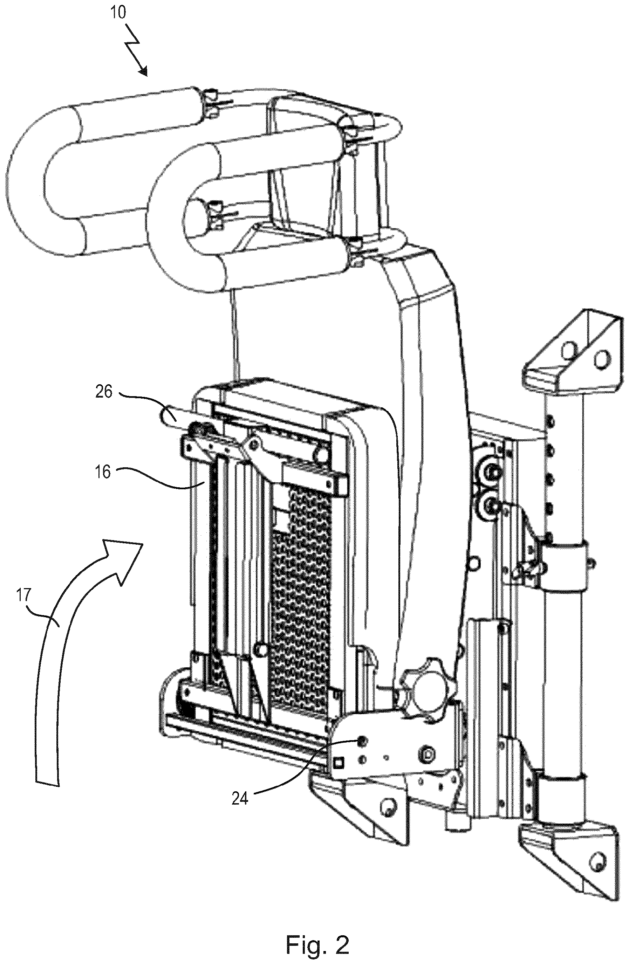

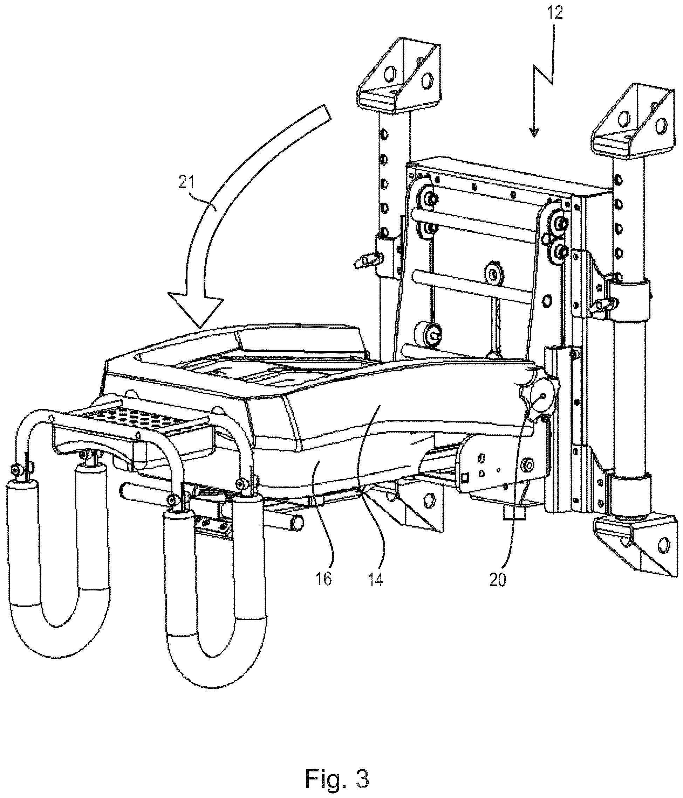

Dabei ist die Rückenlehne 14 um eine Drehachse 20 drehbar am Aufnahmewinkel 18 angebracht. Ein Handrad 22 erlaubt eine Verstellung der Rückenlehne sowie bei vollständiger Öffnung ein Abkippen der Rückenlehne 14, wie das in Fig. 3 dargestellt ist. Das Sitzteil 16 ist um eine Drehachse 24 schwenkbar am Aufnahmewinkel aufgenommen und kann um diese Drehachse 24 nach oben Richtung Rückenlehne 14 gekippt werden, wie das in Fig. 2 dargestellt ist.

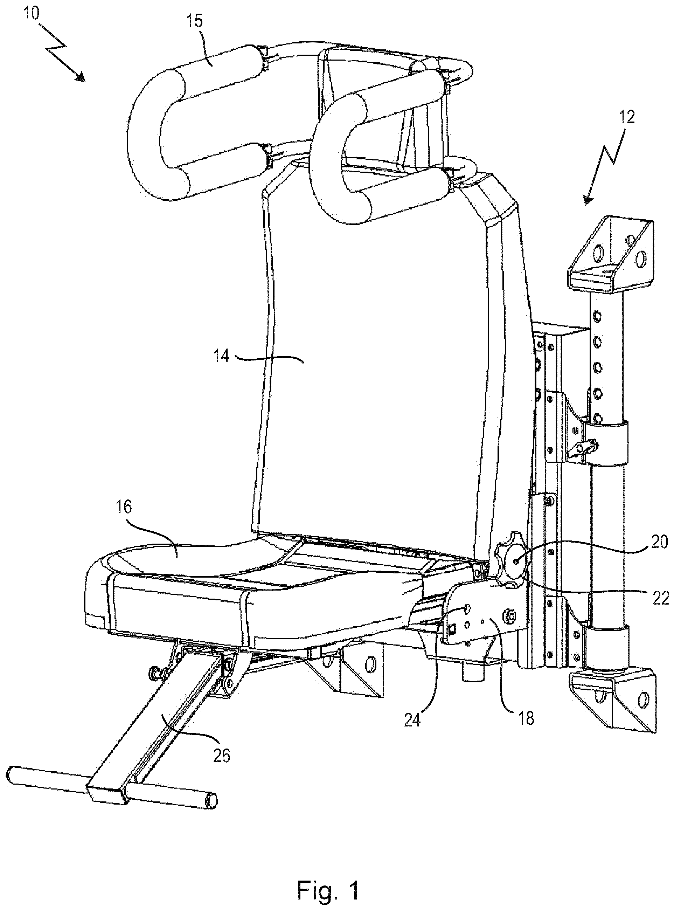

An der Unterseite des Sitzteils 6 ist eine ausfahrbare Fußstütze 26 aufgenommen, in Fig. 1 ist die ausgefahrene Fußstütze 26 gezeigt, in Fig. 2 die eingefahrene Fußstütze 26.

Aus der Figurenfolge von Fig. 1 bis Fig. 3 ist ersichtlich, dass Manipulationen an der Rückenlehne 16, an der Kopfstütze 15, an dem Sitzteil 16 und der Fußstütze 26 völlig unabhängig und ungestört von dem am Fahrzeugsitz 10 montierten Dämpfungsmodul 12 durchgeführt werden können.

Insbesondere in dem in Fig. 3 dargestellten Zustand mit der nach vorne abgeklappten Rückenlehne 14 kann Stauraum hinter dem Fahrzeugsitz 12 und hinter dem Dämpfungsmodul 12 einfach zugänglich gemacht werden. Dies deswegen, da die Oberkante des Dämpfungsmodules 12 nicht bis zur Oberkante des Sitzteiles 16 reicht.

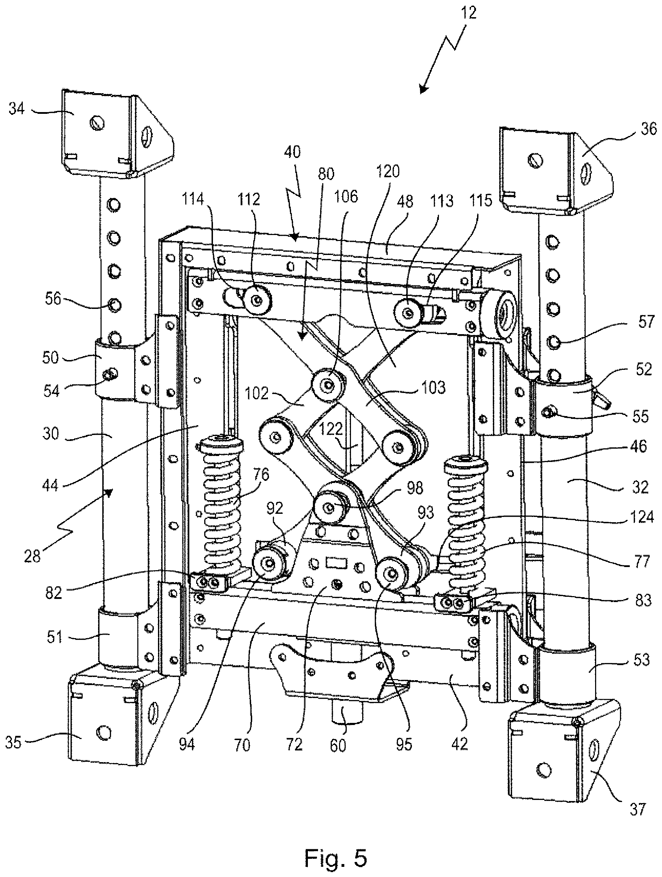

Insbesondere aus den Fig. 5 bis 10 kann entnommen werden, dass das Dämpfungsmodul 12 ein in seiner Gesamtheit mit der Bezugsziffer 28 bezeichnetes Gestell aufweist.

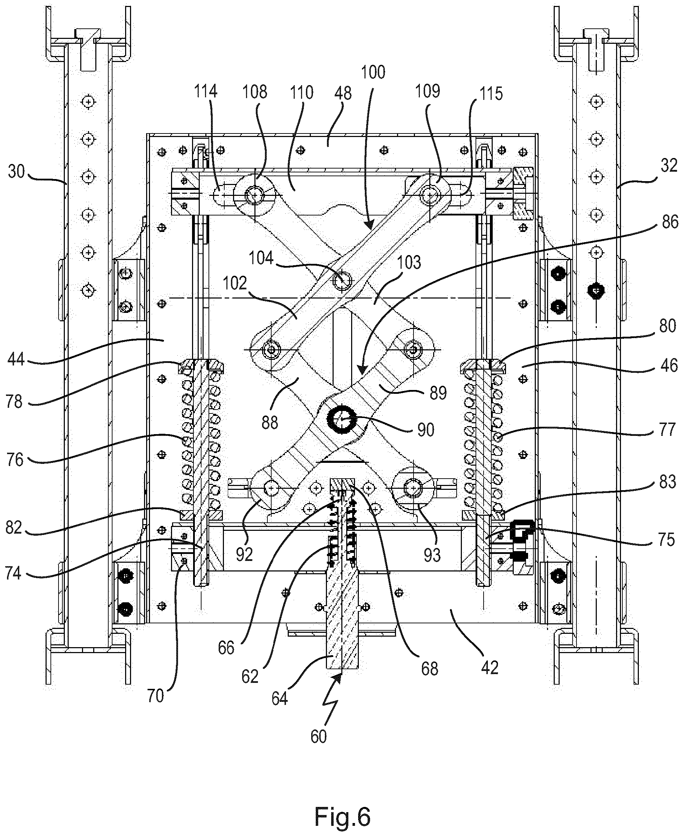

Das Gestell 28 weist zwei hochstehende seitlich voneinander beabstandete Hauptführungsstangen 30 und 32 auf, die im dargestellten Ausführungsbeispiel als Rohrkörper ausgebildet sind, wie das insbesondere aus Fig. 6 ersichtlich ist.

Jede der beiden Hauptführungsstangen 30 und 32 ist am oberen bzw. unteren Ende mit Montageelementen 34 und 35 bzw. 36 und 37 versehen. Über diese Montageelemente 34 bis 37 kann das Gestell 28 an einem Fahrzeug montiert werden.

An den beiden Hauptführungsstangen 30 und 32 ist ein in seiner Gesamtheit mit der Bezugsziffer 40 bezeichneter Rahmen montiert.

Der Rahmen 40 weist eine untere Querstrebe 42 auf, deren seitlichen äußeren Enden mit hochstehenden Seitenteilen 44 und 46 fest verbunden sind.

Am oberen Ende sind die Seitenteile 44 und 46 über eine obere Querstrebe 48 verbunden. Seitlich nach außen stehen von jedem Seitenteil 44 und 46 jeweils zwei in der Höhe voneinander beabstandete Muffen 50 und 51 bzw. 52 und 53 vor.

Die Muffen 50 bis 53 sind über die Hauptführungsstangen 30 bzw. 32 geschoben. Die jeweils oberen Muffen 50 und 52 sind mit Rastbolzen 54 bzw. 55 versehen, die in unterschiedlich höhengelagerten Löchern 56 und 57 im oberen Bereich der Hauptführungsstangen 30 und 32 eingeschoben werden können.

Durch diese Konstruktion kann der Rahmen 40 auf unterschiedlichen Höhenniveaus an den Hauptführungsstangen 30 und 32 montiert werden. Da der Rahmen 40, wie später erläutert, auch Bauteile enthält, die den Fahrzeugsitz tragen, kann somit dieser auf unterschiedliche Höhenniveaus gebracht werden, je nachdem wie das die Gegebenheiten zulassen oder erfordern.

Wie insbesondere aus der Schnittdarstellung von Fig. 6 zu erkennen, ist in der unteren Querstrebe 42 ein in seiner Gesamtheit mit der Bezugsziffer 60 bezeichnetes Dämpfungselement montiert.

Das Dämpfungselement 60 ist als Öl-Hydraulik-Stoßdämpfer ausgebildet, dessen Gehäuse 64 über ein hier nicht näher dargestelltes Außengewinde in ein entsprechendes Innengewinde der unteren Querstrebe 42 eingeschraubt ist. Vom oberen Ende des Gehäuses 64 steht ein federbelasteter Kolben 66 hoch. Das obere Ende kommt an der Unterseite einer Druckplatte 68 zum Liegen, die mit einem ersten Träger 70 fest verbunden ist, der sich höhenverschiebbar zwischen den hochstehenden Seitenteilen 44 und 46 im Rahmen 40 befindet. Die Feder 62, die den Kolben 66 belastet, schiebt diesen nach einem Dämpfungsfall wieder aus. Dadurch wird der erste untere Träger 70 ohne Dämpfungsfall in der in Fig. 6 gezeigten Position gehalten.

Somit ist der erste untere Träger 70 über die Druckplatte 68 auf dem Dämpfungselement 60 abgestützt.

Wie insbesondere aus Fig. 5 zu erkennen, steht von der Oberseite des ersten Trägers 70 eine Anschlussplatte 72 hoch, die mit dem nachfolgend noch zu beschreibenden Scherenhebelmechanismus 80 verbunden ist.

Wie insbesondere aus den Fig. 5 und 6 ersichtlich, stehen im Bereich der seitlichen äußeren Enden des ersten Trägers 70 zwei fest mit diesem montierte Stangen 74 und 75 hoch. Um jede Stange 74 und 75 ist eine Schraubenlinienfeder 76 bzw. 77 angeordnet, deren oberes Ende jeweils an der Unterseite einer Kappe 78 bzw. 79 anliegt. Die Kappen 78 und 79 sind fest mit dem oberen Ende der Stangen 74 und 75 verbunden.

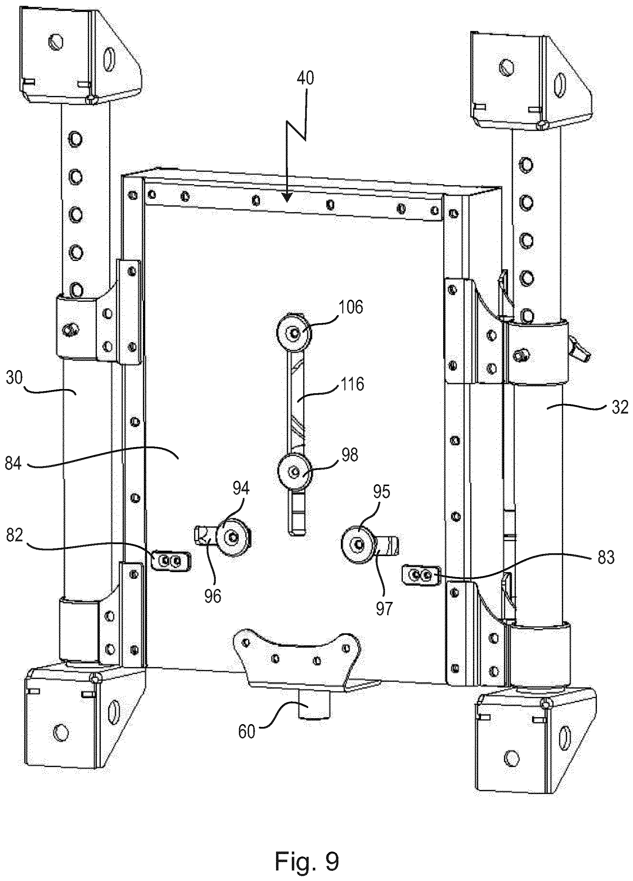

Das gegenüberliegende untere Ende der Schraubenlinienfedern 76 und 77 stützt sich auf Gegenhalter 82 und 83 ab, die fest mit einer aus Fig. 9 ersichtlichen hinteren Führungsplatte 84 verbunden sind. Die hintere Führungsplatte 84 ist fest mit dem Rahmen 40 verbunden. Somit stellen die Gegenhalter 82 und 83 ortsfeste Abstützpunkte der Schraubenlinienfedern 76 und 77 dar.

Der Scherenhebelmechanismus 80 weist, wie das insbesondere aus Fig. 6 ersichtlich ist, ein erstes Scherenhebelelement 86 auf, das aus zwei sich kreuzenden Stäben 88 und 89 aufgebaut ist, die am Kreuzungspunkt über eine Achse 90 verbunden sind. Die Stäbe sind als laschenförmige Flacheisen ausgebildet.

Die jeweils unteren freien Enden 92 und 93 der Stäbe 98 und 99 tragen jeweils eine Buchse 94 bzw. 95. Die Buchsen 94 und 95 laufen dabei in sich horizontal erstreckenden Nuten 96 und 97 in der hinteren Führungsplatte 84, wie das aus Fig. 9 ersichtlich ist. Da die hintere Führungsplatte 84 wie zuvor erwähnt ortsfest ist, da sie fest mit dem Rahmen 40 verbunden ist, stellen die horizontalen Nuten 96 und 97 das ortsfeste Widerlager des unteren Endes des Scherenhebelmechanismus 80 dar.

Im Bereich der Achse 90 ist ebenfalls eine Buchse 98 montiert, wie insbesondere aus Fig, 5 und 9 ersichtlich ist.

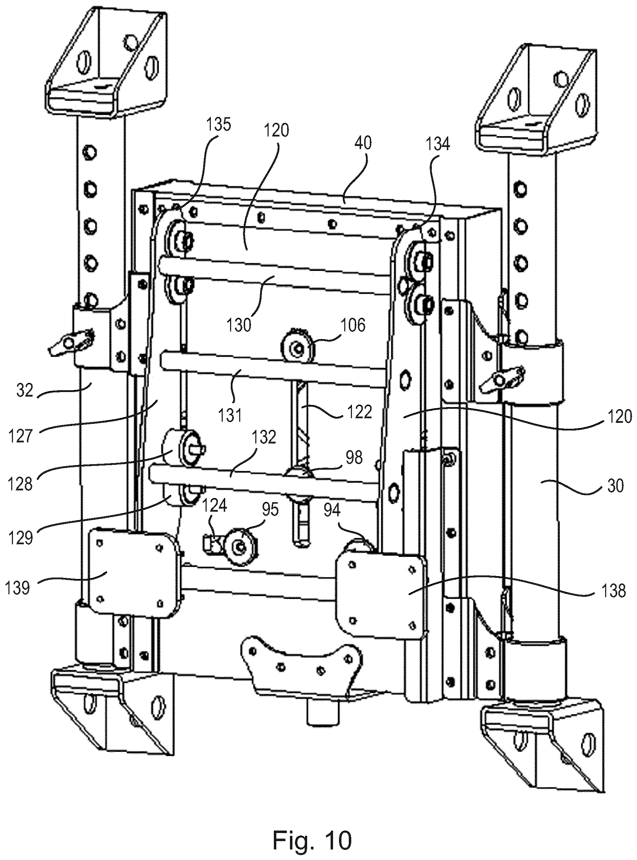

An dieser Stelle soll angesprochen werden, dass sich sowohl die Buchsen 94 und 95 als auch die Buchse 98 beidseits über das Scherenhebelelement 86 hinaus erstrecken, so dass diese nicht nur in der hinteren Führungsplatte 34, wie sie in Fig. 9 gezeigt ist, geführt werden können, sondern auch in einer weiteren, später zu erläuternden vorderen Führungsplatte 120, wie sie insbesondere in Fig. 10 ersichtlich ist.

Der Scherenhebeimechanismus 80 weist noch ein zweites Scherenhebelelement 100 auf, das ebenfalls aus zwei gekreuzten Stäben 102, 103 aufgebaut ist, die über eine Achse 104 miteinander verbunden sind. Auch im Bereich der Achse 104 ist eine beidseitig von dieser vorspringende Buchse 106 montiert, wie sie insbesondere aus Fig. 5, 9 und 10 ersichtlich ist. Die unteren hier nicht näher bezeichneten Enden der Stäbe 102 und 103 sind drehbar mit den oberen Enden der Stäbe 88 und 89 verbunden, wie das bei einem Scherenhebelmechanismus üblich ist.

Die beiden oberen Enden 108, 109 der Stäbe 102 und 103 sind in einem zweiten Träger 110 montiert. Dazu sind an den Enden 108, 109 wieder Buchsen 112, 113 vorgesehen, wie dies insbesondere aus Fig. 5 ersichtlich ist, die in horizontal ausgerichteten Nuten 114, 115 im zweiten Träger 110 laufen.

Insbesondere aus Fig. 9 ist ersichtlich, dass die hintere Führungsplatte 84 eine Vertikalnut 116 aufweist, in der die Buchsen 98 und 106 laufen, die jeweils auf Höhe der Achsen 90 bzw. 104 montiert sind.

Insbesondere aus Fig. 10 ist ersichtlich, dass parallel und im Abstand zur hinteren Führungsplatte 84 noch eine vordere Führungsplatte 120 fest mit dem Rahmen 40 verbunden vorhanden ist, die ebenfalls eine Vertikalnut 122 sowie horizontal verlaufende Nuten 124 aufweisen.

In der Vertikalnut 122 laufen die entsprechend dieser vorderen Führungsplatte 120 zugewandten Abschnitte der Buchsen 98 und 106.

In den horizontalen Nuten 124 laufen die Buchsen 94 und 95.

Insbesondere aus Fig. 10 ist zu erkennen, dass im Rahmen 40 zwei hochstehende Rollenträger 126 und 127 angeordnet sind, die über drei Querstreben 130, 131 und 132 miteinander verbunden sind.

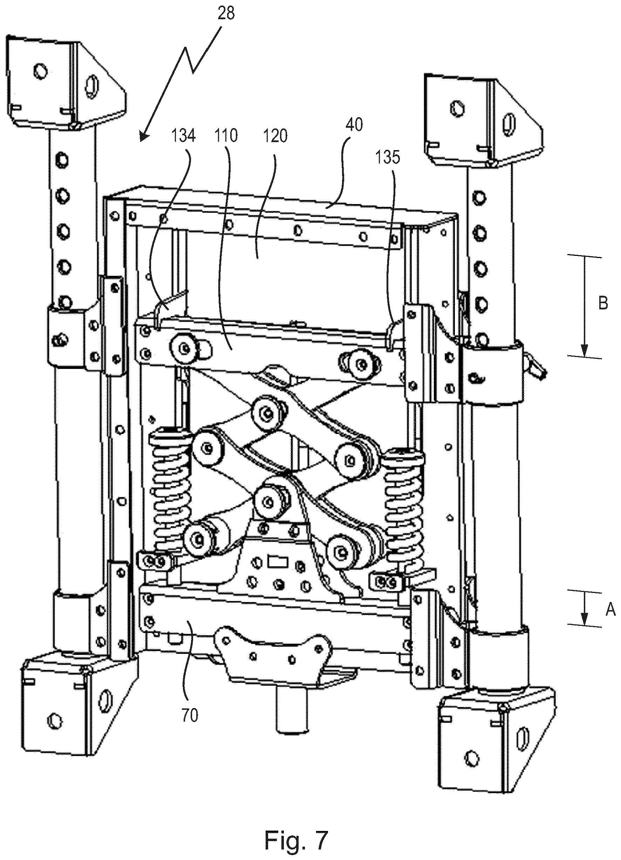

Die Rollenträger 126 bzw. 127 tragen eine Vielzahl an Rollen 128, 129, die so ausgerichtet sind, dass sie auf der dem Betrachter der Fig. 10 zugewandten Seite der vorderen Führungsplatte 120 laufen können. Die oberen Enden der Rollenträger 126, 127 sind mit nach hinten vorspringenden Zapfen 134, 135 versehen, die mit dem oberen Ende des zweiten Trägers 110 fest verbunden sind, wie das insbesondere aus Fig. 7 ersichtlich ist.

Wie insbesondere aus Fig. 10 ersichtlich, sind am unteren Ende der Rollenträger 126, 127 Aufnahmeplatten 138, 139 fest montiert, über die das Dämpfungsmodul 12 als gesamte Baueinheit an dem Aufnahmewinkel 18 des Fahrzeugsitzes 10 montierbar ist.

Der Zusammenbau aus zweitem Träger 110, den Rollenträgern 126 und 127 und der Aufnahmeplatte 138, 139 stellt eine kompakte höhenverschiebbare Einheit des Dämpfungsmodules 12 dar.

Wie zuvor angedeutet, ist die von der Oberseite des ersten Trägers 70 hochstehende Anschlussplatte 72, wie das insbesondere aus Fig. 5 ersichtlich ist, mit der Achse 90 bzw. der Buchse 98 des unteren ersten Scherenhebelelementes 86 verbunden,

Wird daher, wie das in Fig. 7 dargestellt ist, der erste Träger 70 um ein Maß A nach unten bewegt, so wird der Scherenhebelmechanismus 80 eingezogen, wie das aus dem Übergang von Fig. 5 zur Fig. 7 ersichtlich ist, und zwar um ein größeres Maß, nämlich das Maß B.

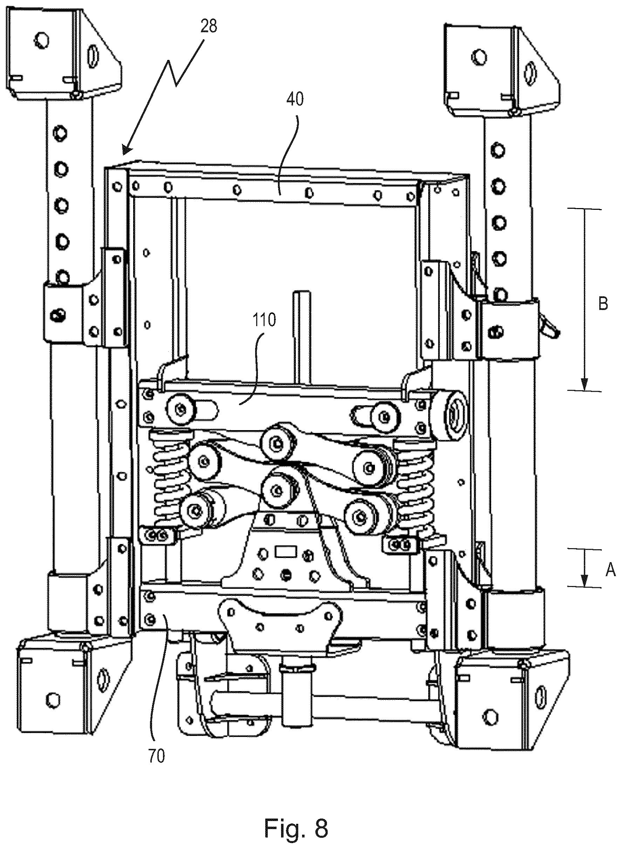

Wird der erste Träger 70 noch weiter nach unten bewegt, wie das in Fig. 8 dargestellt ist, wird der Scherenhebelmechanismus 80 noch weiter eingezogen, bis er vollständig zusammengeklappt ist, wie das in Fig. 8 dargestellt ist. Dementsprechend hat sich dann der zweite obere Träger 110 um ein noch größeres Maß B nach unten bewegt.

Das Verhältnis dieser beiden Bewegungsmaße ist aufgrund der Geometrie des Scherenhebelmechanismus 80 mit zwei übereinander aneinander angeordneten Scherenhebelelementen etwa 1 : 4, das heißt, wird der erste Träger 70 beispielsweise um 50 mm nach unten bewegt, bewegt sich der zweite Träger 110 um etwa 200 mm nach unten.

Die Funktionsweise des Dämpfungsmodules 12 ist wie folgt:

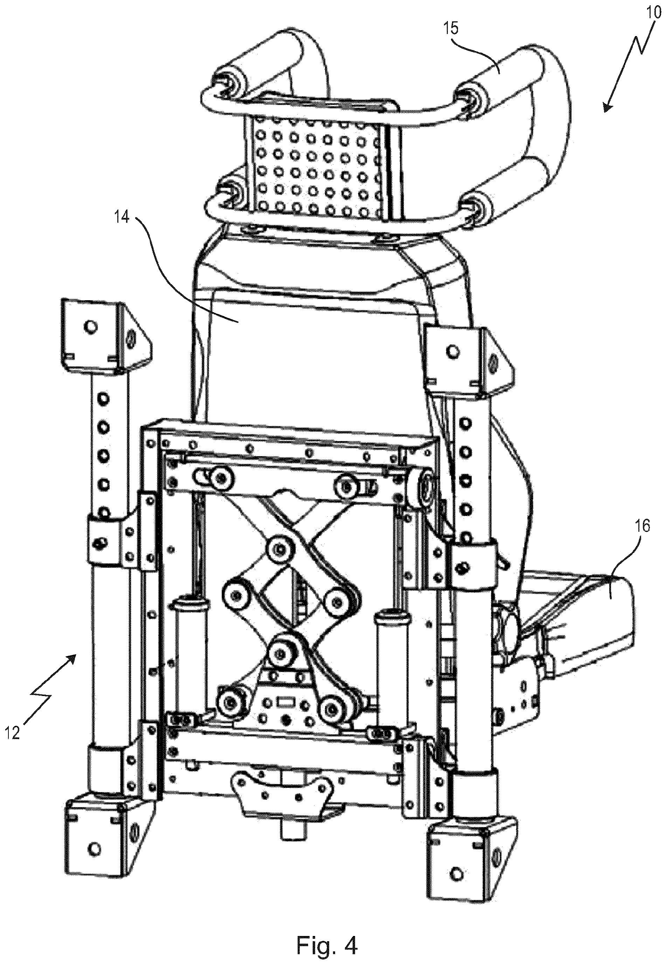

Im Normalfall ist die Ausrichtung so, wie sie in Fig. 4 bzw. Fig. 5 dargestellt ist. Das heißt, der Scherenhebelmechanismus 80 ist maximal nach oben verfahren, Der untere erste Träger 70 ist auf dem Dämpfungselement 60 abgestützt. Die beiden Schraubenlinienfedern 76 und 77 können so eingestellt sein, dass sie in diesem Zustand entspannt sind, sie können aber auch leicht auf Druck vorgespannt sein. Bewegt sich nun das Fahrzeug in einem sehr holprigen Gelände, wirken gewisse vertikale Kräfte ein, die durch die Schraubenlinienfedern 76 und 77 aufgenommen und verteilt werden können.

In einem Schockfall, wenn also beispielsweise das Fahrzeug über eine Mine oder ein IED fährt, wird das Fahrzeug ruckartig angehoben, das heißt die beiden Hauptführungsstangen 30 und 32 samt des darin fest montierten Rahmens 40 bewegen sich innerhalb von Millisekunden ruckartig nach oben. Relativ dazu, aufgrund der Trägheit der Masse des Dämpfungssystems und der Relativbeweglichkeit, bewegen sich sowohl der erste Träger 70 als auch der zweite Träger 110 entgegen der Schockrichtung nach unten. Die nach unten gerichtete Bewegung des ersten Trägers 70 erfolgt gegen den Kolben 66 des Stoßdämpfers 62. Das Maß dieser Bewegung ist konstruktiv durch die Länge der Kolbenstange bedingt und beträgt beispielsweise im dargestellten Ausführungsbeispiel maximal 48 mm.

Aufgrund der festen Verbindung des ersten Trägers 70 über die Anschlussplatte 72 mit der Achse 90 des Scherenhebelmechanismus 80 wird dieser nach unten bewegt, wobei das Gegenlager durch die horizontalen Nuten 96 und 97 bzw. 124 bereitgestellt wird. Bei einem maximalen Hub des ersten Trägers 70 von 48 mm wird der zweite Träger 110 um maximal etwa 180 mm nach unten bewegt, bis er die in Fig. 8 dargestellte Endposition erreicht hat. Die beiden Träger 70 und 110 bewegen sich zeitgleich nach unten.

Gleichzeitig werden die beiden Schraubenlinienfedern 76 und 77 mit jeweils dem gleichen Weg, die der erste Träger 70 durchschreitet, gespannt. Somit nehmen die Schraubenlinienfedern 76 und 77 zusätzlich zu dem Dämpfungselement 60 eine nach unten wirkende Kraft auf.

Nach dem Schock-Ereignis, also beim Herabfallen des Fahrzeuges, wirken die Schraubenlinienfedern 76 und 77 entgegen der Fallrichtung des Fahrzeuges und minimieren dadurch einen harten Aufschlag (Rebound).

Nach dem Schock-Ereignis und nach dem Wiederaufschlagen des Fahrzeuges auf dem Boden befindet sich das Dämpfungsmodul 12 wieder in dem in Fig. 4 und 5 gezeigten Ausgangszustand. Somit kann ein nachfolgendes oder mehrere nachfolgende Schock-Ereignisse wieder entsprechend aufgenommen werden.

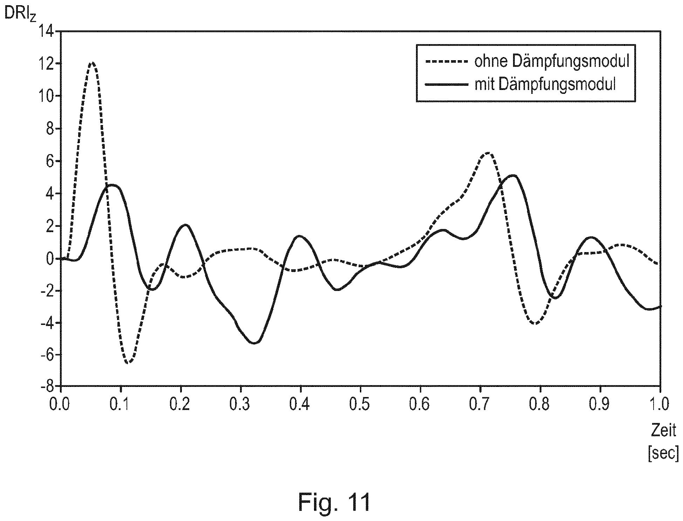

In Fig. 11 ist ein Diagramm dargestellt, in dem als Ordinate der sogenannte DRI_{Z}-Wert gegenüber der Zeit nach Eintreten eines Schock-Ereignisses dargestellt ist. Die gepunktete Linie zeigt den Verlauf des DRI_{z}-Wertes bei einem Fahrzeugsitz ohne Dämpfungsmodul, die durchgezogene Linie den Verlauf mit dem in den Figuren dargestellten Dämpfungsmodul 12. Dabei wurde eine Ansprengung nach NATO Standard AEP-55 STANAG 4569 Level 3b durchgeführt, und zwar wurde ein stabiler Container, der einem 12 Tonnen-Fahrzeug entspricht, an der Unterseite mittig mit 8 kg TNT angesprengt.

In dem Container war sowohl ein Sitz mit dem Dämpfungsmodul als auch ein Sitz ohne das Dämpfungsmodul montiert, auf dem sogenannte Dummys Platz genommen haben und mit den entsprechenden Sicherheitsgurten und dergleichen an den Sitzen gehalten wurden. An den Dummys wurden zahlreiche Sensoren angebracht, die die Schockwirkung auf eine Person erfassen.

Besonders repräsentativ ist der zuvor erwähnte DRI_{Z}-Index, also der sogenannte Dynamic Response Index in Richtung der Wirbelsäule. Dabei wird dieser Index im Bereich der unteren Lendenwirbel ermittelt, die bei einem solchen Schock-Ereignis besonders extremen Belastungen ausgesetzt sind.

Ein maximal zulässiger DRI_{Z}-Index nach NATO STANAG 4569 liegt bei 17,7.

Aus den Graphen ist ersichtlich, dass ein Sitz ohne das erfindungsgemäße Dämpfungsmodul wenige Millisekunden nach dem Schock-Ereignis einen Maximalwert von 12,1 zeigt. Dieser Sitz der Anmelderin hatte ohnehin schon gewisse Dämpfungseigenschaften.

Im Vergleich dazu ist eindrucksvoll ersichtlich, dass durch die Montage eines Dämpfungsmodules 12 dieser DRI_{Z}-Index auf einen Wert von 5,2 abgesenkt werden kann.

Auch die nach diesem initialen Schock-Ereignis ablaufenden Schockwellen, insbesondere auch beim Rebound, sind bei dem Sitz mit dem Dämpfungsmodul wesentlich geringer ausgeprägt. Dadurch kann eindrucksvoll gezeigt werden, welche positive Wirkung ein erfindungsgemäßes Dämpfungsmodul ausübt.

## Patentansprüche

1. Dämpfungsmodul (12) für einen Fahrzeugsitz (10) zum Dämpfen von schockartigen Vertikalbewegungen des Fahrzeuges bei insbesondere durch Minen und IEDs verursachten Druckwellen, wobei das Dämpfungsmodul (12) ein Gestell (28) aufweist, das ortsfest mit einem Fahrzeug verbindbar ist und an dem ein Fahrzeugsitz (10) montierbar ist, und wobei das Dämpfungsmodul (12) ein Dämpfungselement (60) zur Dämpfung des Fahrzeugsitzes (10) aufweist, **dadurch gekennzeichnet, dass** am Gestell (28) ein Rahmen (40) befestigt ist, der einen ersten, bezüglich des Rahmens (40) höhenverfahrbaren Träger (70) aufweist, welcher mit dem am Rahmen (40) montierten Dämpfungselement (60) verbunden ist, und der ferner einen relativ zum ersten Träger (70) höhenverfahrbaren zweiten Träger (110) aufweist, der dazu geeignet ist den Fahrzeugsitz (10) zu tragen, wobei erster und zweiter Träger (70, 110) über einen Scherenhebelmechanismus (80) untereinander verbunden sind, und dass der erste Träger (70) über zumindest eine Feder (62) zusätzlich gegenüber dem Gestell (28) federnd abgestützt ist, so dass ein Absenken des ersten Trägers (70) relativ zum Gestell (28) um ein Maß A ein Einziehen des Scherenhebelmechanismus (80) und somit Absenken des Fahrzeugsitzes (10) um ein Maß B > A bewirkt, wobei der erste Träger (70) mit einem Kreuzungspunkt (90) zweier gekreuzter Stäbe (88, 89) eines Scherenhebelelementes (86) des Scherenhebelmechanismus (80) verbunden ist.

2. Dämpfungsmodul nach Anspruch 1, **dadurch gekennzeichnet, dass** der Scherenhebelmechanismus (80) mehrere aneinandergereihte Scherenhebelelemente (86, 100) aufweist, die jeweils aus einem Paar an über Kreuz gelegten Stäben (88, 89; 102, 103) aufgebaut sind.

3. Dämpfungsmodul nach Anspruch 2, **dadurch gekennzeichnet, dass** der Scherenhebelmechanismus (80) zwei Scherenhebelelemente (86, 100) aufweist.

4. Dämpfungsmodul nach einem der Ansprüche 1 bis 3, **dadurch gekennzeichnet, dass** der Scherenhebelmechanismus (80) in einer Führung führbar ist.

5. Dämpfungsmodul nach Anspruch 4, **dadurch gekennzeichnet, dass** an Endpunkten der freien Enden von gekreuzten Stäben (102, 103), über die diese mit dem zweiten Träger (110) verbunden sind, Führungselemente angeordnet sind, die in horizontal verlaufenden Führungsbahnen des zweiten Trägers (110) führbar sind.

6. Dämpfungsmodul nach Anspruch 5, **dadurch gekennzeichnet, dass** die Führungselemente als Buchsen (112, 113) ausgebildet sind und die Führungsbahnen als Nuten (114, 115) ausgebildet sind, in denen die Buchsen (112, 113) laufen.

7. Dämpfungsmodul nach einem der Ansprüche 4 bis 6, **dadurch gekennzeichnet, dass** die Führung zumindest eine Führungsplatte (84, 120) aufweist, die fest mit dem Rahmen (40) verbunden ist, und in der zumindest eine Führungsbahn ausgespart ist, in der sich bewegende Teile des Scherenhebelmechanismus (80) führbar sind.

8. Dämpfungsmodul nach Anspruch 7, **dadurch gekennzeichnet, dass** der Scherenhebelmechanismus (80) an den Kreuzungspunkten der sich kreuzenden Stäbe (88, 89; 102, 103) Führungselemente aufweist, die in der Führungsbahn laufen.

9. Dämpfungsmodul nach Anspruch 8, **dadurch gekennzeichnet, dass** die Führungselemente als Buchsen (98, 106) ausgebildet sind, die in der Führungsbahn laufen.

10. Dämpfungsmodul nach Anspruch 9, **dadurch gekennzeichnet, dass** die Führungsbahn als vertikale Nut (116, 122) in der zumindest einen Führungsplatte (84, 120) ausgestaltet ist, in der die Buchsen (98, 106) laufen.

11. Dämpfungsmodul nach einem der Ansprüche 1 bis 10, **dadurch gekennzeichnet, dass** in der zumindest einen Platte (84, 100) horizontal verlaufende Nuten (96, 97, 124) ausgespart sind, in denen Führungselemente der Endpunkte der sich kreuzenden Stäbe (88, 89) desjenigen Scherenhebelelementes (86) geführt sind, die dem ersten Träger (70) zugewandt sind.

12. Dämpfungsmodul nach einem der Ansprüche 1 - 11, **dadurch gekennzeichnet, dass** das Gestell (28) zwei seitliche Hauptführungsstangen (30, 32) aufweist, an denen der Rahmen (40) auf unterschiedlichen Höhenniveaus fest montierbar ist.

13. Dämpfungsmodul nach Anspruch 12, **dadurch gekennzeichnet, dass** die Hauptführungsstangen (30, 32) jeweils endseitige Montageelemente (34, 35; 36, 37) aufweisen, über die das Gestell (28) an einem Fahrzeug montierbar ist.

14. Dämpfungsmodul nach einem der Ansprüche 12 bis 13, **dadurch gekennzeichnet, dass** der Rahmen (40) eine untere Querstrebe (42) aufweist, auf der sich ein Ende des Dämpfungselementes (60) abstützt, wobei dessen gegenüberliegendes Ende mit dem ersten Träger (70) verbunden ist.

15. Dämpfungsmodul nach einem der Ansprüche 12 bis 14, **dadurch gekennzeichnet, dass** der Rahmen (40) zwei Seitenteile (44, 46) aufweist, die mit der unteren Querstrebe (42) verbunden sind und die am oberen Ende über eine obere Querstrebe (48) verbunden sind.

16. Dämpfungsmodul nach Anspruch 15, **dadurch gekennzeichnet, dass** der zweite Träger (110) in den Seitenteilen (44, 46) geführt ist.

17. Dämpfungsmodul nach einem der Ansprüche 12 bis 16, **dadurch gekennzeichnet, dass** der zweite Träger (110) mit Führungsrollen (128, 129) versehen ist, die über eine Führungsplatte (120) laufen, die fest mit dem Rahmen (40) verbunden ist.

18. Dämpfungsmodul nach einem der Ansprüche 12 bis 17, **dadurch gekennzeichnet, dass** zwei Federn beidseits des Scherenhebelmechanismus (80), aber innerhalb des Rahmens (40), angeordnet sind.

19. Dämpfungsmodul nach Anspruch 18, **dadurch gekennzeichnet, dass** die Federn als hochstehende Schraubenlinienfedern (76, 77) ausgebildet sind, die sich einerseits am zweiten Träger (110) abstützen und andererseits am Rahmen (40).

20. Fahrzeugsitz, verbunden mit einem Dämpfungsmodul (12) nach einem der Ansprüche 1 bis 19.

21. Fahrzeug, ausgestattet mit einem Fahrzeugsitz nach Anspruch 20.

## Claims

1. Damping module (12) for a vehicle seat (10) for damping shock-like vertical movements of the vehicle in the event of pressure waves caused in particular by mines and IEDs, wherein the damping module (12) has a stand (28) which can be connected in a positionally fixed manner to a vehicle and on which a vehicle seat (10) can be mounted, and wherein the damping module (12) has a damping element (60) for damping the vehicle seat (10), **characterized in that** a frame (40) is fastened to the stand (28), the frame having a first support (70) which is movable in height with respect to the frame (40) and is connected to the damping element (60) mounted on the frame (40), and said frame furthermore having a second support (110) which is movable in height relative to the first support (70) and is suitable for supporting the vehicle seat (10), wherein the first and second support (70, 110) are connected to each other via a scissors lever mechanism (80), and **in that** the first support (70) is additionally resiliently supported in relation to the stand (28) via at least one spring (62) such that lowering of the first supports (70) by an extent A relative to the stand (28) causes the scissors lever mechanism (80) to be pulled in and therefore the vehicle seat (10) to be lowered by an extent B > A, wherein the first support (70) is connected to an intersecting point (90) of two crossed bars (88, 89) of a scissors lever element (86) of the scissors lever mechanism (80).

2. Damping module according to Claim 1, **characterized in that** the scissors lever mechanism (80) has a plurality of scissors lever elements (86, 100) which are linked to one another and are each constructed from a pair of bars (88, 89; 102, 103) placed crosswise.

3. Damping module according to Claim 2, **characterized in that** the scissors lever mechanism (80) has two scissors lever elements (86, 100).

4. Damping module according to one of Claims 1 to 3, **characterized in that** the scissors lever mechanism (80) can be guided in a guide.

5. Damping module according to Claim 4, **characterized in that** guide elements which can be guided in horizontally running guide tracks of the second support (110) are arranged at end points of the free ends of crossed bars (102, 103), via which end points said bars are connected to the second support (110).

6. Damping module according to Claim 5, **characterized in that** the guide elements are designed as sockets (112, 113) and the guide tracks are designed as grooves (114, 115) in which the sockets (112, 113) run.

7. Damping module according to one of Claims 4 to 6, **characterized in that** the guide has at least one guide plate (84, 120) which is fixedly connected to the frame (40) and in which at least one guide track is recessed, in which moving parts of the scissors lever mechanism (80) can be guided.

8. Damping module according to Claim 7, **characterized in that** the scissors lever mechanism (80) has guide elements, which run in the guide track, at the intersecting points of the crossing bars (88, 89; 102, 103).

9. Damping module according to Claim 8, **characterized in that** the guide elements are designed as sockets (98, 106) which run in the guide track.

10. Damping module according to Claim 9, **characterized in that** the guide track is configured as a vertical groove (116, 122) in the at least one guide plate (84, 120), in which groove the sockets (98, 106) run.

11. Damping module according to one of Claims 1 to 10, **characterized in that** horizontally running grooves (96, 97, 124) are recessed in the at least one plate (84, 100), in which grooves guide elements of the end points of the crossing bars (88, 89) of the same scissors lever element (86) are guided, said guide elements facing the first support (70).

12. Damping module according to one of Claims 1-11, **characterized in that** the stand (28) has two lateral main guide rods (30, 32) on which the frame (40) can be fixedly mounted at different height levels.

13. Damping module according to Claim 12, **characterized in that** the main guide rods (30, 32) each have end-side mounting elements (34, 35; 36, 37) via which the stand (28) can be mounted on a vehicle.

14. Damping module according to either of Claims 12 and 13, **characterized in that** the frame (40) has a lower strut (42) on which one end of the damping element (60) is supported, wherein the opposite end thereof is connected to the first support (70).

15. Damping module according to one of Claims 12 to 14, **characterized in that** the frame (40) has two side parts (44, 46) which are connected to the lower transverse strut (42) and which are connected at the upper end via an upper transverse strut (48).

16. Damping module according to Claim 15, **characterized in that** the second support (110) is guided in the side parts (44, 46).

17. Damping module according to one of Claims 12 to 16, **characterized in that** the second support (110) is provided with guide rollers (128, 129) which run via a guide plate (120) which is fixedly connected to the frame (40).

18. Damping module according to one of Claims 12 to 17, **characterized in that** two springs are arranged on both sides of the scissors lever mechanism (80), but within the frame (40).

19. Damping module according to Claim 18, **characterized in that** the springs are designed as elevated helicoidal springs (76, 77) which are supported at one end on the second support (110) and at the other end on the frame (40).

20. Vehicle seat connected to a damping module (12) according to one of Claims 1 to 19.

21. Vehicle equipped with a vehicle seat according to Claim 20.

## Revendications

1. Module d'amortissement (12) pour un siège de véhicule (10) servant à l'amortissement de déplacements verticaux brusques du véhicule en cas d'ondes de surpression provoquées en particulier par des mines et des dispositifs explosifs improvisés, dans lequel le module d'amortissement (12) comprend un bâti (28) qui peut être relié de manière fixe à un véhicule et sur lequel un siège de véhicule (10) peut être monté, et dans lequel le module d'amortissement (12) comprend un élément d'amortissement (60) servant à l'amortissement du siège de véhicule (10), **caractérisé en ce qu'**un cadre (40) est fixé sur le bâti (28), lequel cadre comprend un premier support (70) déplaçable en hauteur par rapport au cadre (40), lequel premier support est relié à l'élément d'amortissement (60) monté sur le cadre (40), et lequel cadre comprend en outre un deuxième support (110) déplaçable en hauteur par rapport au premier support (70), lequel deuxième support se prête à supporter le siège de véhicule (10), le premier et le deuxième support (70, 110) étant reliés l'un à l'autre par le biais d'un mécanisme à leviers croisés (80), et **en ce que** le premier support (70) est en outre supporté de manière élastique par rapport au bâti (28) par le biais d'au moins un ressort (62), de telle sorte qu'un abaissement du premier support (70) par rapport au bâti (28) d'une mesure A provoque un escamotage du mécanisme à leviers croisés (80) et par conséquent un abaissement du siège de véhicule (10) d'une mesure B > A, le premier support (70) étant relié à un point d'intersection (90) de deux barres croisées (88, 89) d'un élément de leviers croisés (86) du mécanisme à leviers croisés (80).

2. Module d'amortissement selon la revendication 1, **caractérisé en ce que** le mécanisme à leviers croisés (80) comprend plusieurs éléments de leviers croisés (86, 100) juxtaposés, lesquels sont constitués respectivement d'une paire de barres (88, 89 ; 102, 103) placées en croix.

3. Module d'amortissement selon la revendication 2, **caractérisé en ce que** le mécanisme à leviers croisés (80) comprend deux éléments de leviers croisés (86, 100).

4. Module d'amortissement selon l'une des revendications 1 à 3, **caractérisé en ce que** le mécanisme à leviers croisés (80) peut être guidé dans un guide.

5. Module d'amortissement selon la revendication 4, **caractérisé en ce que** des éléments de guidage sont disposés à des points d'extrémité des extrémités libres de barres croisées (102, 103) par le biais desquels celles-ci sont reliées au deuxième support (110), lesquels éléments de guidage peuvent être guidés dans des glissières de guidage s'étendant horizontalement du deuxième support (110).

6. Module d'amortissement selon la revendication 5, **caractérisé en ce que** les éléments de guidage sont réalisés sous forme de douilles (112, 113) et les glissières de guidage sont réalisées sous forme de rainures (114, 115) dans lesquelles les douilles (112, 113) se déplacent.

7. Module d'amortissement selon l'une des revendications 4 à 6, **caractérisé en ce que** le guide comprend au moins une plaque de guidage (84, 120) qui est reliée fixement au cadre (40) et dans laquelle au moins une glissière de guidage est évidée, dans laquelle des parties mobiles du mécanisme à leviers croisés (80) peuvent être guidées.

8. Module d'amortissement selon la revendication 7, **caractérisé en ce que** le mécanisme à leviers croisés (80) comprend, aux points de croisement des barres (88, 89 ; 102, 103) se croisant, des éléments de guidage qui se déplacent dans la glissière de guidage.

9. Module d'amortissement selon la revendication 8, **caractérisé en ce que** les éléments de guidage sont réalisés sous forme de douilles (98, 106) qui se déplacent dans la glissière de guidage.

10. Module d'amortissement selon la revendication 9, **caractérisé en ce que** la glissière de guidage est configurée sous forme de rainure verticale (116, 122) dans ladite au moins une plaque de guidage (84, 120), rainure dans laquelle les douilles (98, 106) se déplacent.

11. Module d'amortissement selon l'une des revendications 1 à 10, **caractérisé en ce que** des rainures (96, 97, 124) s'étendant horizontalement son évidées dans ladite au moins une plaque (84, 100), dans lesquelles sont guidés des éléments de guidage des points d'extrémité des barres (88, 89) se croisant de l'élément de leviers croisés (86) qui est tourné vers le premier support (70).

12. Module d'amortissement selon l'une des revendications 1 à 11, **caractérisé en ce que** le bâti (28) comprend deux tiges de guidage principales latérales (30, 32) sur lesquelles le cadre (40) peut être monté fixement à différents niveaux de hauteur.

13. Module d'amortissement selon la revendication 12, **caractérisé en ce que** les tiges de guidage principales (30, 32) comprennent respectivement des éléments de montage (34, 35 ; 36, 37) côté extrémité par le biais desquels le bâti (28) peut être monté sur un véhicule.

14. Module d'amortissement selon l'une des revendications 12 et 13, **caractérisé en ce que** le cadre (40) comprend une traverse inférieure (42) sur laquelle est supportée une extrémité de l'élément d'amortissement (60), l'extrémité opposée de celui-ci étant reliée au premier support (70).

15. Module d'amortissement selon l'une des revendications 12 à 14, **caractérisé en ce que** le cadre (40) comprend deux parties latérales (44, 46) qui sont reliées à la traverse inférieure (42) et sont reliées, à l'extrémité supérieure, par le biais d'une traverse supérieure (48).

16. Module d'amortissement selon la revendication 15, **caractérisé en ce que** le deuxième support (110) est guidé dans les parties latérales (44, 46).

17. Module d'amortissement selon l'une des revendications 12 à 16, **caractérisé en ce que** le deuxième support (110) est doté de rouleaux de guidage (128, 129) qui se déplacent sur une plaque de guidage (120) qui est reliée fixement au cadre (40).

18. Module amortissement selon l'une des revendications 12 à 17, **caractérisé en ce que** deux ressorts sont disposés des deux côtés du mécanisme à leviers croisés (80), mais à l'intérieur du cadre (40).

19. Module d'amortissement selon la revendication 18, **caractérisé en ce que** les ressorts sont réalisés sous forme de ressorts hélicoïdaux verticaux (76, 77) qui sont supportés d'un côté sur le deuxième support (110) et de l'autre côté sur le cadre (40).

20. Siège de véhicule, relié à un module d'amortissement (12) selon l'une des revendications 1 à 19.

21. Véhicule, équipé d'un siège de véhicule selon la revendication 20.
